# NEW EUROPEAN PATENT SPECIFICATION

(11) **EP 0 385 791 B2**
(45) Date of publication and mention of the opposition decision: **30.03.2005**
(45) Mention of the grant of the patent: 28.12.1994
(21) Application number: 90302222.6
(22) Date of filing: 01.03.1990
(51) Int. Cl.: B32B 17/10, H05B 3/86

(54) **Production of heated windows**
Herstellung von beheizten Fenstern
Fabrication de vitres à chauffage

(30) Priority: 03.03.1989 GB 8904902
(43) Date of publication of application: 05.09.1990
(73) Proprietor: PILKINGTON PLC, St. Helens, Merseyside WA10 3TT (GB)
(72) Inventor: Lyon, Michael, Aughton, Ormskirk, Lancashire (GB); Castle, Derek Charles, Hayley Green, Halesowen, West Midlands (GB)
(74) Representative: Jenkins, Peter David

(56) References cited:
- EP-B- 0 186 787
- WO-A-83/03384
- DD-A- 103 225
- DE-B- 1 515 208
- DE-B- 1 540 940
- DE-C- 870 475
- GB-A- 972 453
- GB-A- 1 392 736
- US-A- 3 383 762
- US-A- 4 102 722
- US-A- 4 284 452
- US-A- 4 323 726
- US-A- 4 395 622
- Datenblatt STANNOL "Weichlotlegierungen"

## Description

The invention relates to a process for the production of heated windows, in particular windows which are electrically heated by an array of fine, closely spaced wires embedded in a plastics interlayer between two outer panes, usually of glass.

In such windows, the heating wires are embedded in a ply of interlayer sandwiched between outer panes and extend between and in contact with opposed bus bars whereby a heating current may be passed through the wires.

In the process described in UK patent specification 972 453, an array of fine, closely-spaced parallel wires is formed on the surface of a glass pane and adhered to the glass by spraying with a dilute solution of interlayer material in a volatile solvent. Bus bars are formed by laying thin, tinned, copper strips over the wires, and brushing over the copper strips with some of the volatile solvent, which flows round and under the copper strips and disperses the interlayer material which would otherwise separate the copper strip from the wires. The glass pane carrying the array of wires and bus bars is then formed into a laminate in conventional manner with an interlayer and second glass pane applied over the wire and bus bars, and the resulting assembly de-aired and autoclaved. On autoclaving, the interlayer material softens and the array of heating wires and bus bars become embedded in the interlayer.

The electrical connections to the heating wires depend on the mechanical contact between the heating wires and the bus bars, which requires special and demanding precautions to ensure reliable and durable connections. It would be desirable to provide some simple means of securing a more reliable and durable electrical contact between the bus bars and the heating wires.

According to the present invention, there is provided a process for the production of a wire-heated laminated window according to claim 1.

The present invention also provides a wire heated laminated window according to claim 6.

The solder used is selected to melt under the conditions encountered on autoclaving (and accordingly is referred to hereinafter as a "low melting solder"), so avoiding the need for a separate step to solder the heating wires to the bus bars.

When polyvinylbutyral is used as the interlayer material, the laminate will usually be heated in an autoclave at a temperature in the range 135°C to 150°C and a pressure of 8 x 10⁵ to 15 x 10⁵ Pa (8 to 15 bars) for a period of 15 to 45 minutes. The solder used is selected to melt under the conditions it encounters in the autoclave. Thus the solder has a melting point up to about 150°C. It is preferred to use a fusible alloy solder which wets the metal strips. Unfortunately, since the heating wires are usually made of tungsten, which is difficult to wet, suitable fusible alloys which also wet the heating wires are not normally available. It is therefore preferred to use solders which contain about 50% or more by weight bismuth, since such solders generally expand on cooling so that they will grip the heating wires firmly in position.

The low melting solders may be used over higher melting solders (fusible alloys) which may be applied over the metal strips, especially if the strips are of copper, to protect them from atmospheric corrosion. In that case, it is possible that the two layers of solder may react together to produce other alloys. However, provided the resultant layer structures include sufficient alloy components, effective as solder, melting below the autoclaving temperature, such reaction will not usually be a problem. Examples of solders which may be used include a lead/bismuth eutectic melting at 124°C and a tin/bismuth eutectic melting at 138°C.

The application of the present invention in a novel process for the production of a wire heated laminate will now be described with reference to the accompanying drawings. This description, and the accompanying drawings, are provided by way of example only. It will be appreciated that the technique of using low melting point solder in the production of wire heated laminates by autoclaving can be used in other processes for the production of wire heated laminates which involve autoclaving a laminate containing heating wires in contact with bus bars.

In the drawings:
Figure 1 is a plan view of an array of heating wires being applied to the surface of a sheet of interlayer material in accordance with the invention;
Figure 2 is a section on the line II-II in Figure 1;
Figure 3 is a section, corresponding to Figure 2, at a later stage in the production process after metal strips have been applied over the wires of the heating array.
Figure 4a is a drawing based on a photograph showing a fragmentary section of the metal strips on either side of the wire array taken in the direction of arrow IV in Figure 3 after autoclaving of the laminate.
Figure 4b is a drawing based on a photograph, similar to and for comparison with Figure 4a, of a laminate made without the use of a low melting solder in accordance with the invention.

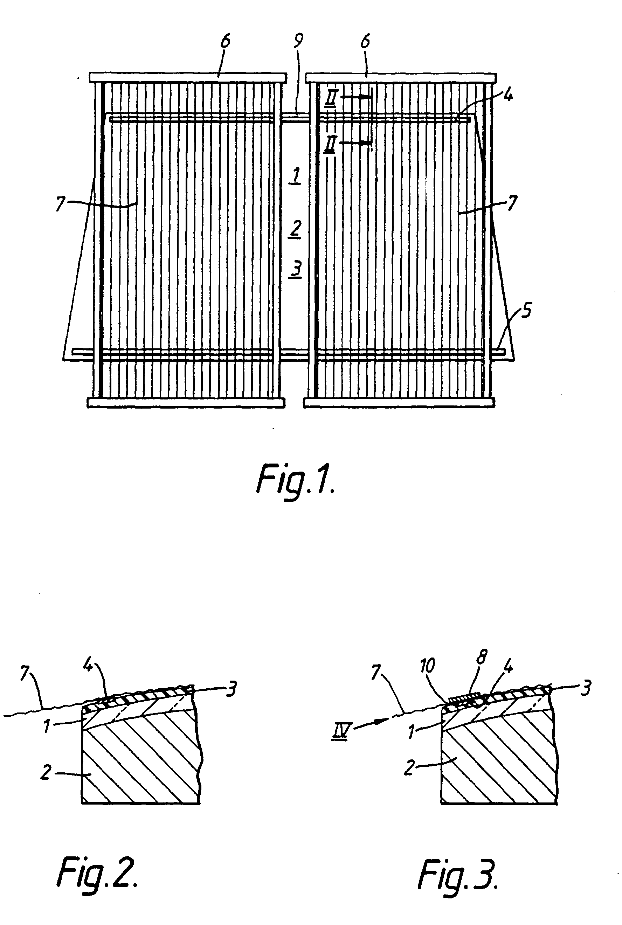

Referring to Figures 1 and 2 of the drawings, a first curved glass pane 1, which is to constitute the inner pane of a laminated vehicle window, is placed on a horizontal jig 2 having an upper surface with a curvature corresponding to that of the glass pane.

A sheet 3 of interlayer material, for example a sheet of polyvinylbutyral of thickness 0.76 mm, is laid over the glass pane so that its curvature conforms to that of the glass.

Narrow metal strips, for example strips 4,5 of copper 2-3 mm wide and about 0.05 mm thick, tinned with a surface layer of tin lead alloy (Sn:Pb::60:40) to protect the copper metal surface from oxidation, are laid over the interlayer material in positions adjacent opposite edges of the heated area of the laminated window to be produced and a heated iron is run over the metal strips to melt the interlayer material locally and embed the metal strips in it as shown in Figure 2.

Two jigs 6, each carrying a pre-formed array 7 of fine, closely-spaced heating wires are then laid over the interlayer material so that the wires rest on the interlayer material.
In practice, the heating wires will usually, but not necessarily, be crimped in known manner. Further wider metal strips 8, preferably of copper tinned with a surface layer of tin lead alloy (Sn:Pb::60:40) to protect the copper surface from oxidation, are then applied over the metal strips 4 and 5 (see Figure 3) so that they extend beyond the narrower metal strips on both edges thereof. A hot iron is then run over the surface of the wider metal strips to cause them to adhere to the interlayer material and temporarily secure the wires in position on the interlayer material by trapping them between the metal strips and the interlayer. The ends of these wider metal strips preferably extend beyond the edges of the glass for connection of an electrical supply across the array of heating wires, using the metal strips as bus bars. If desired the metal strips along the upper edge 9 of the window as shown in Figure 1 may be extended along the side edges to the bottom edge and extend beyond the side edges adjacent the bottom corners of the window for more convenient connection of an electrical supply when the window is fitted in the vehicle.

A second curved glass pane (not shown) of corresponding size and curvature to the first pane, is then applied over the interlayer, wire array and metal strips constituting the bus bars, and excess interlayer material cut away where it extends beyond the edge of the glass pane. The assembly panes and interlayer is then de-aired and heated in an autoclave in known manner. During the autoclaving, the interlayer softens and the wire array and overlying metal strips 8 become embedded in the interlayer and hence securely fixed in position.

To improve the electrical connection between the metal strips serving as bus bars and the heating wires, the wider metal strips 8 overlying the heating wires are provided with a surface layer 10 (Figure 3) of low melting solder on their faces in contact with the array of heating wires 7. This layer will usually be at least 2 µm thick, preferably at least 5 µm thick, but may be much thicker, for example 25 µm or even more. The low melting solder may be applied over the higher melting tin lead alloy referred to above if the latter is present, and may be, for example, a lead/bismuth eutectic melting at 124°C or a tin/bismuth eutectic melting at 138°C. Low melting solder on the metal strips melts on autoclaving the laminate providing a secure, durable electrical contact between the metal strips 8 and the heating wires 7.

If desired, the faces of the metal strips 4 in contact with the array of heating wires 7 may also be provided with a surface layer of low melting solder which melts during autoclaving.

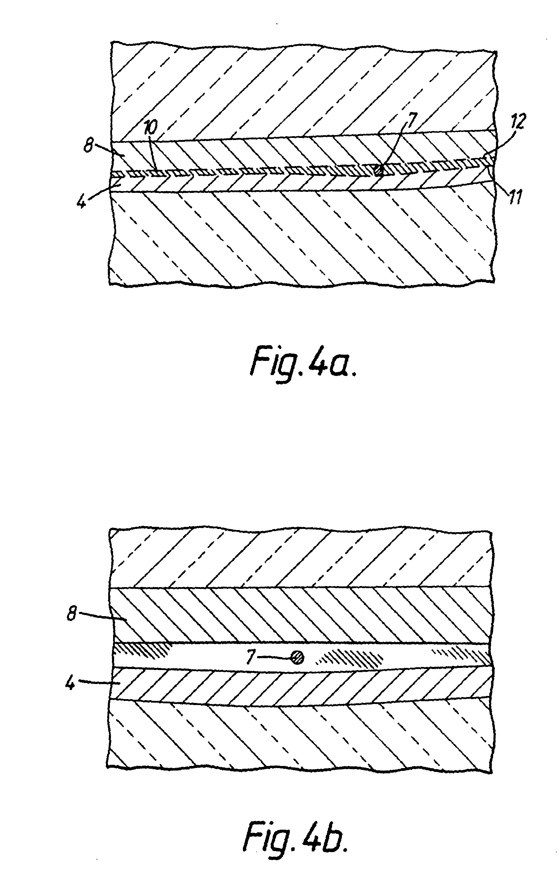

Figure 4a is a drawing, greatly enlarged showing metal strips 4,8 above and below a heating wire of the array 7. The space between the metal strips contains the solder 10 which had been applied to metal strips 8 and has melted during autoclaving and solidified to fill that space and grip the heating wires of the array firmly in position while making good electrical contact to them and to the metal strips 4,8 which serve as bus bars. Dotted lines 11,12 have been added to the drawings to show the boundaries between the metal strips 4,8 and the solder 10.

Figure 4b is a similar drawing of a fragmentary section of a laminate made in a similar manner but without using a low melting solder in accordance with the invention, with corresponding parts designated with the same numerals 4, 7 and 8. In this case, electrical contact between the heating wires of the array 7 and the metal strips relies on mechanical contact between the heating wires and the metal strips which, as is apparent from the drawing, is liable to be intermittent (or even non-existent) and unreliable.

Thus it may be seen that the use of a low melting solder in accordance with the present invention enable a secure, reliable and durable electrical contact to be achieved between the heating wires and the bus bars, by means of soldered contacts, without the need for a separate soldering step.

## Claims

1. A process for the production of a wire-heated laminated window comprising an array of fine, closely spaced heating wires (7) embedded in a ply of interlayer (3) sandwiched between outer panes (1), said array extending between and in contact with opposed bus bars (4,8;5,8) with a face of each of the bus bars (4,8;5,8) in contact with the heating wires (7) being provided with a surface layer (10) of a solder, in which process the laminate is subjected to an autoclaving step to adhere the interlayer to the adjacent panes, the solder having a melting point such that on autoclaving of the laminate the solder melts to provide good electrical contact between that bus bar (4,8;5,8) and the heating wires (7) **characterised in that** each bus bar (4,8;5,8) comprises a pair of opposed metal strips (4,8;5,8), one on each side of the wire array (7), and at least one of the metal strips (4,8;5,8) of said pair is provided with a surface layer (10) of the solder on its face in contact with the heating wires (7) whereby following autoclaving the solidified solder (10) fills the space between the metal strips (4,8;5,8).

2. A process according to claim 1 in which the solder (10) is a lead/bismuth eutectic melting at 124°C.

3. A process according to claim 1 in which the solder (10) is a tin/bismuth eutectic melting at 138°C.

4. A process according to any of the preceding claims wherein the interlayer (3) is of polyvinylbutyral and the laminate is heated in an autoclave at a pressure in the range 8 x 10⁵ to 15 x 10⁵ Pa (8 to 15 bars) and a temperature in the range 135°C to 150°C for a period in the range 15 to 45 minutes.

5. A wire-heated laminated window comprising an array of fine, closely spaced heating wires (7) embedded in a ply of polyvinylbutyral interlayer (3) sandwiched between and adhered to outer panes (1), the array (7) extending between and in contact with opposed bus bars (4,8;5,8), each of the bus bars (4,8;5,8) in contact with the heating wires (7) being provided with a surface layer (10) of a solder having a melting point up to about 150°C, **characterised in that** each bus bar (4,8;5,8) comprises a pair of opposed metal strips (4,8;5,8), one on each side of the wire array (7), the solder (10) filling the space between the strips (4,8;5,8) and gripping the heating wires (7) in position.

## Patentansprüche

1. Verfahren zur Herstellung eines drahtbeheizten laminierten Fensters, das eine regelmäßige Anordnung von feinen, nahe beabstandeten Heizdrähten (7) aufweist, die in eine Zwischenschichtlage (3) eingebettet sind, die zwischen äußeren Scheiben (1), wie ein Sandwich, angeordnet ist, wobei sich die Anordnung zwischen und in Kontakt mit gegenüberliegenden Sammelschienen (4,8; 5,8) erstreckt, wobei die Stirnseite einer jeden Sammelschiene (4,8; 5,8), die in Kontakt ist mit den Heizdrähten (7), mit einer Oberflächenschicht(10) aus einem Lötmittel versehen ist, und wobei das Laminat einem Autoklavenschritt unterworfen wird, um die Zwischenschicht an den benachbarten Scheiben anzukleben, wobei das Lötmittel einen solchen Schmelzpunkt besitzt, dass bei der Autoklavenbehandlung des Laminats das Lötmittel schmilzt, um einen guten elektrischen Kontakt zwischen den Sammelschienen (4,8; 5,8) und den Heizdrähten (7) zu bewirken, **dadurch gekennzeichnet, dass** jede Sammelschiene (4,8; 5,8) ein Paar gegenüberliegender Metallstreifen (4,8; 5,8) aufweist, eines an jeder Seite der Anordnung der Heizdrähte (7), und wobei mindestens einer der Metallstreifen (4,8; 5,8) dieses Paares mit einer Oberflächenschicht (10) aus einem Lötmittel auf seiner Stirnseite in Kontakt mit den Heizdrähten (7) versehen ist, wobei nach dem Autoklavenschritt das verfestigte Lötmittel (10) den Zwischenraum zwischen den Metallstreifen (4,8; 5,8) ausfüllt.

2. Verfahren nach Anspruch 1, wobei das Lötmittel (10) eine eutektische Schmelze aus Blei-Wismut bei 124°C ist.

3. Verfahren nach Anspruch 1, wobei das Lötmittel (10) eine eutektische Schmelze aus Zinn-Wismut bei 138°C ist.

4. Verfahren nach einem der vorhergehenden Ansprüche, wobei die Zwischenschicht (3) aus Polyvinylbutyral besteht und das Laminat in einem Autoklaven bei einem Druck im Bereich von 8 x 10⁵ Pa bis 15 x 10⁵ Pa (8 bis 15 bar) und einer Temperatur im Bereich von 135°C bis 150°C für eine Zeitdauer im Bereich von 15 bis 45 Minuten erhitzt wird.

5. Drahtbeheiztes laminiertes Fenster, das eine regelmäßige Anordnung von feinen, nahe beabstandeten Heizdrähten (7) aufweist, die in eine Zwischenlage (3) aus Polyvinylbutyral eingebettet sind, die zwischen äußeren Scheiben (1) wie ein Sandwich angeordnet und angeklebt sind, wobei sich die Anordnung zwischen und in Kontakt mit gegenüberliegenden Sammelschienen (4,8; 5,8) erstreckt, wobei jede der Sammelschienen (4,8; 5,8) sich in Kontakt mit den Heizdrähten (7) befindet, die mit einer Oberflächenschicht (10) aus einem Lötmittel, das einen Schmelzpunkt von ca. 150°c besitzt, versehen sind, **dadurch gekennzeichnet**, das jede Sammelschiene (4,8; 5,8) ein Paar gegenüberliegender Metallstreifen (4,8; 5,8) aufweist, eines an jeder Seite der Anordnung der Heizdrähte (7), wobei das Lötmittel (10) den Zwischenraum zwischen den Metallstreifen (4,8, 5,8) ausfüllt und die Heizdrähte (7) in Position hält.

## Revendications

1. Procédé pour la fabrication d'une vitre feuilletée chauffée par des fils comprenant un réseau de fils de chauffage (7) fins, étroitement espacés, enrobés dans une épaisseur d'une couche intermédiaire (3) prise en sandwich entre des vitres externes (1), ledit réseau s'étendant entre des barres bus opposées (4,8 ; 5,8) avec lesquelles il est en contact, une face de chacune des barres bus (4,8 ; 5,8) en contact avec les fils de chauffage (7) étant pourvue d'une couche de surface (10) en métal d'apport de brasage, procédé dans lequel le feuilleté est soumis à une phase de passage à l'autoclave pour faire adhérer la couche intermédiaire aux vitres adjacentes, le métal d'apport de brasage ayant un point de fusion tel que, lors du passage à l'autoclave du feuilleté, le métal d'apport de brasage fond pour établir un bon contact électrique entre cette barre bus (4,8 ; 5,8) et les fils de chauffage (7), **caractérisé en ce que** chaque barre bus (4,8 ; 5,8) comporte une paire de bandes de métal opposées (4,8 ; 5,8), une sur chaque côté du réseau de fils (7), et au moins une des bandes de métal (4,8 ; 5,8) de ladite paire est pourvue d'une couche de surface (10) du métal d'apport de brasage sur sa face en contact avec les fils de chauffage (7), grâce à quoi, à la suite du passage à l'autoclave, le métal d'apport de brasage solidifié (10) remplit l'espace entre les bandes de métal (4,8 ; 5,8).

2. Procédé selon la revendication 1, dans lequel le métal d'apport de brasage (10) est un eutectique de plomb/bismuth fondant à 124°C.

3. Procédé selon la revendication 1, dans lequel le métal d'apport de brasage (10) est un eutectique d'étain/bismuth fondant à 138°C.

4. Procédé selon l'une quelconque des revendications précédentes, dans lequel la couche intermédiaire (3) est en polyvinylbutyral et le feuilleté est chauffé dans un autoclave à une pression dans la plage de 8 x 10⁵ à 15 x 10⁵ Pa (8 à 15 bars) et à une température dans la plage de 135°C à 150°C pendant une durée dans la plage 15 à 45 minutes.

5. Vitre feuilletée chauffée par des fils comprenant un réseau de fils de chauffage fins (7), étroitement espacés, enrobés dans une épaisseur d'une couche intermédiaire (3) de polyvinylbutyral prise en sandwich entre des vitres externes (1) auxquelles elle est collée, le réseau (7) s'étendant entre des barres bus opposées (4,8 ; 5,8) avec lesquelles il est en contact, chacune des barres bus (4,8 ; 5,8) en contact avec les fils (7) de chauffage étant pourvue d'une couche de surface (10) en métal d'apport de brasage ayant un point de fusion jusqu'à environ 150°C, **caractérisée en ce que** chaque barre bus (4,8 ; 5,8) comporte une paire de bandes de métal opposées (4,8 ; 5,8), une sur chaque côté du réseau (7) de fils, le métal d'apport de brasage (10) remplissant l'espace entre les bandes (4,8 ; 5,8) et enserrant les fils (7) de chauffage en position.
